# EUROPEAN PATENT SPECIFICATION

(11) **EP 2 298 441 B1**
(45) Date of publication and mention of the grant of the patent: **18.05.2016**
(21) Application number: 10172934.1
(22) Date of filing: 16.08.2010
(51) Int. Cl.: B01J 20/34, B01D 15/00, C02F 1/28, C02F 1/461, B01J 20/12, B01J 20/16, B01J 20/20, C02F 101/20, C02F 101/22, C02F 103/02

(54) **Drinking water filter system, method of regenerating the same, and water purifying device including the drinking water filter system**
Trinkwasserfiltersystem, Verfahren zu seiner Regeneration und Wasserreinigungsvorrichtung mit dem Trinkwasserfiltersystem
Système de filtre d'eau potable, son procédé de régénération et dispositif de purification de l'eau incluant le système de filtre d'eau potable

(30) Priority: 21.08.2009 KR 20090077608
(43) Date of publication of application: 23.03.2011
(73) Proprietor: Samsung Electronics Co., Ltd., Suwon-si, Gyeonggi-do, 443-742 (KR)
(72) Inventor: Kim, Jae-eun, 449-712, Gyeonggi-do (KR); Lee, Joo-wook, 449-712, Gyeonggi-do (KR); Kim, Jae-young, 449-712, Gyeonggi-do (KR); Kang, Hyo-rang, 449-712, Gyeonggi-do (KR)
(74) Representative: Greene, Simon Kenneth

(56) References cited:
- EP-A1- 0 915 059
- WO-A1-2009/053972
- CN-A- 1 201 759
- JP-A- 57 099 389
- JP-A- 2005 034 705
- US-A- 3 827 961
- US-A- 5 904 832
- US-A- 6 045 704
- US-A1- 2004 187 685
- US-B1- 6 391 185

## Description

### BACKGROUND

### 1. Field

One or more embodiments relate to a drinking water filter system, a method of regenerating the same and a water purifying device including the drinking water filter system.

### 2. Description of the Related Art

Generally, at least one activated carbon filter is used in a water purifying device for home use in order to remove chlorine, taste, smell and particle matter from tap water. Such activated carbon filters efficiently filter microorganisms in the initial stage of use.

However, microorganisms attached to the activated carbon itself proliferate after a predetermined period of time so that pollutants including microorganisms may be discharged from the activated carbon filters into the water meant to be purified.

Therefore, the activated carbon filters are required to be periodically replaced. An average replacement cycle is about 2 months, and maintenance of the water purifying device is difficult and expensive, and the costs of managing the water purifying device is increased due to the continual replacement of the activated carbon filters.

A thermal regeneration technique has been developed to regenerate an activated carbon filter, e.g., to prevent or remove the build-up of microorganisms. However, since a high-temperature steam is used in the typical thermal regeneration technique, in-situ regeneration may not be performed, and the thermal regeneration technique cannot typically be used at home. In order to overcome these problems, an electric heating regeneration method has been developed. However, energy consumption of the electric heating regeneration method is prohibitive. A method of regenerating a filter by inserting a metal electrode into a filter system and using a high concentration electrolyte has been also developed. However, this method requires a complicated, and therefore expensive, system and the electrolyte used during regeneration needs to be sufficiently removed before water may again be filtered therethrough.

### SUMMARY

One or more embodiments include a drinking water filter system that can be easily regenerated.

One or more embodiments include a method of regenerating the drinking water filter system.

One or more embodiments include a water purifying device including the drinking water filter system.

Additional aspects will be set forth in part in the description which follows and, in part, will be apparent from the description, or may be learned by practice of the presented embodiments.

According to one or more embodiments, a drinking water filter system includes; a filter unit including; a first electrode and a second electrode disposed separate from and substantially opposite to the first electrode, wherein at least one of the first electrode and the second electrode is a filter layer, and a voltage applying device which alternately applies a forward voltage and a reverse voltage between the first electrode and the second electrode to sterilize and regenerate the at least one filter layer.

At least one of the first electrode and the second electrode is an activated carbon filter layer.

In one embodiment, one of the first electrode and the second electrode may be an activated carbon filter layer, and the other of the first electrode and the second electrode may be a metal layer.

In one embodiment, the voltage applying device may include; a power supply connected to the first electrode and the second electrode, and a function generator connected to the power supply.

The voltage applying device is configured to alternately apply a positive voltage and a negative voltage to the first electrode and the second electrode, wherein the positive voltage is greater than about 2 V and equal to or less than about 50 V.

The voltage applying device is configured to apply a voltage capable of electrolyzing water between the first electrode and the second electrode.

The voltage applying device is configured to generate a positive electric potential of at least 1.4 V on the surface of at least one of the first electrode and the second electrode.

In one embodiment, a water permeable insulating layer may be disposed between the first electrode and the second electrode.

In one embodiment, a first current collecting layer may be disposed on an outer surface of the first electrode, and a second current collecting layer may be disposed on an outer surface of the second electrode, wherein the first electrode and the second electrode are connected to the voltage applying device via the first collecting layer and the second cu rrent collecting layer, respectively.

In one embodiment, a plurality of filter units may be stacked and the filter units may be parallelly connected to the voltage applying device.

In one embodiment, the filter unit may include at least one additional filter layer disposed between the first electrode and the second electrode, and a water permeable insulating layer may be disposed between every two adjacent layers of the first electrode, the at least one additional filter layer and the second electrode. In one embodiment, a first current collecting layer may be disposed on an outer surface of the first electrode, a second current collecting layer may be disposed on an outer surface of the second electrode, and the first electrode and the second electrode may be connected to the voltage applying device via the first current collecting layer and the second current collecting layer, respectively.

In one embodiment, the filter unit may be in the form of one of a planar shape and a roll shape.

According to one or more embodiments, a method of regenerating a drinking water filter system including a filter unit including a first electrode and a second electrode separately disposed from each other to face each other, wherein at least one of the first and second electrodes is a filter layer includes; alternately applying a forward voltage and a reverse voltage between the first electrode and the second electrode to sterilize and regenerate the filter layer.

At least one of the first electrode and the second electrode is an activated carbon filter layer.

In one embodiment, one of the first electrode and the second electrode may be an activated carbon filter layer, and the other of the first electrode and the second electrode is a metal layer.

In one embodiment the forward voltage and the reverse voltage may be applied between the first electrode and the second electrode using a voltage applying device including a power supply connected to the first electrode and the second electrode and a function generator connected to the power supply.

A positive voltage and a negative voltage is alternately applied to the first electrode and the second electrode so that the forward voltage and the reverse voltage are alternately applied between the first electrode and the second electrode, wherein the positive voltage is greater than about 2 V and equal to or less than about 50 V.

A voltage capable of electrolyzing water is applied between the first electrode and the second electrode during the sterilization.

A positive electric potential of at least 1.4 V is generated on a surface of at least one of the first electrode and the second electrode during the sterilization.

In one embodiment, tap water may at least one of fill and flow in the filter unit during the sterilization.

In one embodiment, a water permeable insulating layer may be disposed between the first electrode and the second electrode.

in one embodiment, the filter unit may be in the form of a one of a planar shape and a roll shape.

According to one or more embodiments, a water purifying device includes the drinking water filter system.

### BRIEF DESCRIPTION OF THE DRAWINGS

These and/or other aspects will become apparent and more readily appreciated from the following description of the embodiments, taken in conjunction with the accompanying drawings of which:
FIGS. 1 to 4 are cross-sectional views of embodiments of drinking water filter systems;
FIGS. 5A to 5C are views for describing an embodiment of a method of regenerating a drinking water filter system;
FIGS. 6A and 6B are scanning electron microscopic ("SEM") images of an embodiment of an activated carbon filter to which a positive (+) voltage and a negative (-) voltage are respectively applied;
FIG. 7 is a graph illustrating the regeneration efficiency of an embodiment of a drinking water filter system;
FIGS. 8A to 8D are cross-sectional views of comparative examples of drinking water filter systems; and
FIG. 8E is a cross-sectional view of embodiment of a drinking water filter system.

### DETAILED DESCRIPTION

Various example embodiments will now be described more fully with reference to the accompanying drawings in which some example embodiments are shown. These embodiments may, however, be embodied in many different forms and should not be construed as limited to the embodiments set forth herein. Rather, these embodiments are provided so that this disclosure will be thorough and complete, and will fully convey the scope of the disclosure to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms first, second, etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section could be termed a second element, component, region, layer or section and, similarly, a second element, component, region, layer or section could be termed a first element, component, region, layer or section, without departing from the scope of example embodiments.

The terminology used herein is for the purpose of describing particular embodiments only and is not intended to be limiting of example embodiments. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Furthermore, relative terms, such as "lower" or "bottom" and "upper" or "top," may be used herein to describe one element's relationship to another elements as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower", can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the disclosure.

All methods described herein can be performed in a suitable order unless otherwise indicated herein or otherwise clearly contradicted by context. The use of any and all examples, or exemplary language (e.g., "such as"), is intended merely to better illustrate the disclosure and does not pose a limitation on the scope thereof unless otherwise claimed. No language in the specification should be construed as indicating any non-claimed element as essential to the practice of the embodiments as used herein.

In the drawings, the thicknesses of layers and regions may be exaggerated for clarity.

Hereinafter, a drinking water filter system, a method of regenerating the drinking water filter system, and a water purifying device including the drinking water filter system will be described with reference to the accompanying drawings.

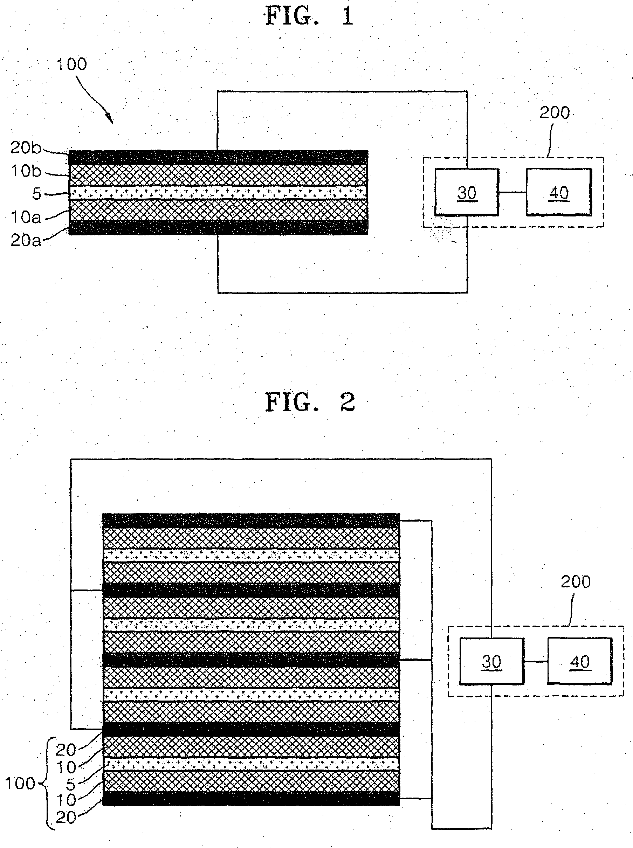

FIG. 1 is a cross-sectional view of an embodiment of a drinking water filter system.

Referring to FIG. 1, first and second activated filters 10a and 10b may be separately disposed to face each other. Embodiments of the first and second activated filters 10a and 10b may have various structures such as activated carbon fiber woven fabric (hereinafter referred to as "activated carbon fiber"), activated carbon non-woven fabric, activated carbon paste, a sheet coated with activated carbon slurry and various other similar structures. A separation layer 5 may be disposed between the first and second activated filters 10a and 10b. In one embodiment, the separation layer 5 may be formed of a water permeable insulator. For example, embodiments of the separation layer 5 may be formed of a polymer material such as polypropylene, polyester or other materials with similar characteristics. A first current collecting layer 20a may be disposed on the outer surface of the first activated carbon filter 10a (the lower surface of the first activated carbon filter 10a as shown in FIG. 1) and a second current collecting layer 20b may be disposed on the outer surface of the second activated carbon filter 10b (the upper surface of the second activated carbon filter 10b as shown in FIG. 1). The first and second current collecting layers 20a and 20b may be formed of a material with low electrical resistance, for example, graphite or other materials with similar characteristics. The first and second activated filters 10a and 10b, the separation layer 5, and the first and second current collecting layers 20a and 20b may constitute a filter unit 100. Alternative embodiments of the filter unit 100 may not include the separation layer 5 and/or at least one of the first and second current collecting layers 20a and 20b.

A voltage applying device 200 may be connected to the filter unit 100. The first activated carbon filter 10a may be connected to the voltage applying device 200 via the first current collecting layer 20a, and the second activated carbon filter 10b may be connected to the voltage applying device 200 via the second current collecting layer 20b in embodiments where both the first and second current collecting layers 20a and 20b are present, alternatively, the voltage applying device 200 may be directly connected to the first and/or second activated carbon filters 10a and/or 10b. The voltage applying device 200 may alternately apply a forward voltage and a reverse voltage between the first and second activated filters 10a and 10b to regenerate the first and second activated filters 10a and 10b. Specifically, in one embodiment, the voltage applying device 200 may alternately apply a positive (+) voltage and a negative (-) voltage to the first and second activated filters 10a and 10b in order to alternately apply the forward voltage and the reverse voltage thereto. In this regard, the positive (+) voltage may be a voltage sufficient to induce electrolysis of water between the first and second activated filters 10a and 10b. In addition, the positive (+) voltage may be a voltage which generates a positive electric potential of at least 1.4 V between the surfaces of first and second activated filters 10a and 10b during the sterilization and regeneration. For example, in one embodiment the positive (+) voltage may be greater than about 2 V and equal to or less than about 50 V. The first and second activated filters 10a and 10b are used as electrodes during the regeneration process.

The voltage applying device 200 will be described in more detail. Embodiments of the voltage applying device 200 may include a power supply 30 connected to the first and second activated filters 10a and 10b and a function generator 40 connected to the power supply 30. The power supply 30 may be a device which generates a direct current ("DC") voltage, i.e., a DC power supply. The function generator 40 may generate a square wave, a sine wave, a triangle wave, or the like, and the frequency (or pulse width) thereof may be adjusted. The forward voltage and the reverse voltage may be alternately applied between the first and second activated filters 10a and 10b using the power supply 30 and the function generator 40. That is, the positive (+) and negative (-) voltages are alternately applied to the first and second activated filters 10a and 10b. However, alternative embodiments of the voltage applying device 200 may be modified in various forms.

In the drinking water filter system having the structure shown in FIG. 1, the filter unit 100 may have a flow through type structure through which water flows. For example, water flows through the water permeable separation layer 5 and the first and second activated filters 10a and 10b, and is discharged out of the drinking water filter system. In order to assist correct water flow, the filter unit 100 may be disposed in a case (not shown) including an inlet and an outlet, and the separation layer 5 may be larger than the first and second activated filters 10a and 10b to be closely disposed on an inner surface of the case. In addition, holes may be formed in the first activated carbon filter 10a and the first current collecting layer 20a, or holes may be formed in the second activated carbon filter 10b and the second current collecting layer 20b. Water introduced through the inlet in the case may be purified while flowing through the first and second activated filters 10a and 10b after being passed through the separation layer 5 and discharged by the outlet.

Another embodiment of a drinking water filter system as shown in FIG. 2 may include a plurality of the filter units 100 shown in FIG. 1. With respect to FIG. 2, the first and second activated filters 10a and 10b are referred to as an activated carbon filter 10, and the first and second current collecting layers 20a and 20b are referred to as a current collecting layer 20.

Referring to FIG. 2, a plurality of filter units 100 may be stacked on one another. In one embodiment, each of the filter units 100 may include two activated carbon filters 10 and a separation layer 5 between the two activated carbon filters 10. Each of the filter units 100 may include current collecting layers 20 disposed on the outside surface of each activated carbon filter 10. The current collecting layer 20 disposed between adjacent two filter units 100 may be used as a common current collecting layer for the two filter units 100. In other words, a plurality of activated carbon filters 10, e.g., in one embodiment an even number of more than four activated carbon filters 10, may be stacked, and the separation layers 5 and the current collecting layers 20 may be alternately stacked between the activated carbon filters 10. In this regard, the current collecting layers 20 may be further disposed on the outer surface of the lowermost activated carbon filter 10 and on the outer surface of the uppermost activated carbon filter 10.

Among the plurality of current collecting layers 20 shown in FIG. 2, the positive electrode current collecting layer, e.g., an odd numbered current collecting layer 20 as measured from the lowermost layer, e.g., the lowermost layer is an odd numbered layer, the second lowermost layer is an even numbered layer, etc., may be commonly connected to a positive electrode terminal of the voltage applying device 200, and the negative electrode current collecting layer, e.g., an even numbered current collecting layer 20 as measured from the lowermost layer, may be commonly connected to a negative electrode terminal of the voltage applying device 200. In one embodiment, the voltage applying device 200 may be similar to that of FIG. 1. In other words, the voltage applying device 200 of FIG. 2 may include a power supply 30 connected to a plurality of current collecting layers 20 and a function generator 40 connected to the power supply 30. The positive (+) and negative (-) voltages may be alternately applied to the positive electrode current collecting layer 20 and the negative electrode current collecting layer 20 using the voltage applying device 200.

In the embodiment including the filter units 100 of FIG. 2, the separate filter units 100 are parallelly connected to the voltage applying device 200.

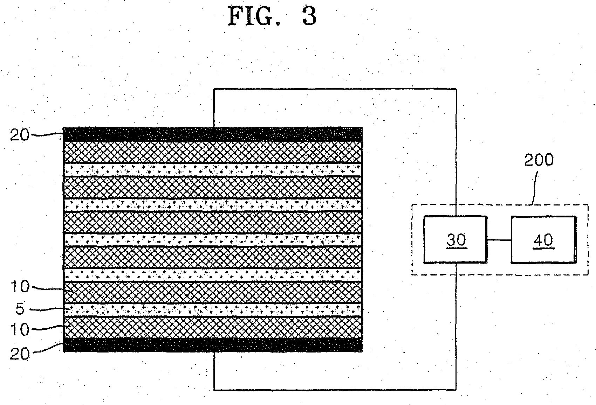

FIG. 3 shows another embodiment of a drinking water filter system.

Referring to FIG. 3, a plurality of activated carbon filters 10, e.g., three or more activated carbon filters 10, may be stacked. The separation layer 5 may be disposed between the respective activated carbon filters 10. The current collecting layers 20 may be disposed only on the outer surface of the lowermost activated carbon filter 10 and on the outer surface of the uppermost activated carbon filter 10. The two current collecting layers 20 may be connected to the voltage applying device 200. In one embodiment, the voltage applying device 200 may be the same as that of FIG. 1.

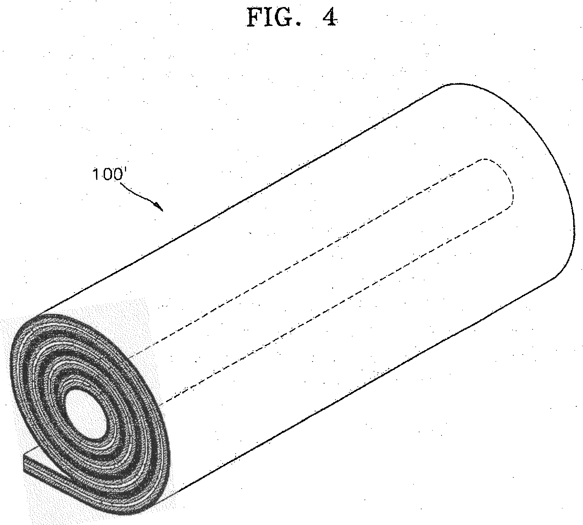

In FIGS. 1 to 3, activated carbon filters 10a, 10b and 10 include a plurality of stacked flat sheet shape. That is, the embodiments of filter units shown in FIGS. 1-3 are plate-type filter units. However, embodiments also include configurations wherein the filter unit may be wound to be in a roll shape as shown in FIG. 4.

Referring to FIG. 4, the filter unit 100' may be in a roll shape. In one embodiment, the filter unit 100' may have substantially the same structure as the filter unit 100 of FIG. 1, except that filter unit 100 is wound in a roll shape to result in the filter unit 100'. Even though not shown in FIG. 4, alternative embodiments of the filter unit 100' may be rolled on a wound core. The roll-shaped filter unit 100' may be applied to a cylindrical water purifying case (not shown).

Even though not shown herein, alternative embodiments include configurations wherein the filter unit 100' may have the same structure as the filter units shown in FIGS. 2 and 3 that are then wound into roll shapes.

Comparative examples include configurations wherein one of the first and second activated filters 10a and 10b in the drinking water filter system of FIG. 1 may be replaced by a metal layer (not shown). That is, a single activated carbon filter may be used to purify water, and then regenerated. In such an comparative example, the activated carbon filter may be used as a first electrode, and the metal layer may be used as a second electrode during the regeneration of the activated carbon filter. A plurality of the filter units using the activated carbon filter as the first electrode and the metal layer as the second electrode may be stacked and may be wound to have a roll shape, e.g., the alternative comparative examples including the filter unit including the metal layer may have structures similar to those illustrated in FIGS. 1, 2 and 4. In the alternative comparative example having a structure similar to that of FIG. 3, one of the lowermost activated carbon filter 10 and the uppermost activated carbon filter 10 may be replaced by a metal electrode layer.

Hereinafter, an embodiment of a method of regenerating a drinking water filter system will be described in more detail. The method will be described in more detail using the drinking water filter system of FIG. 1.

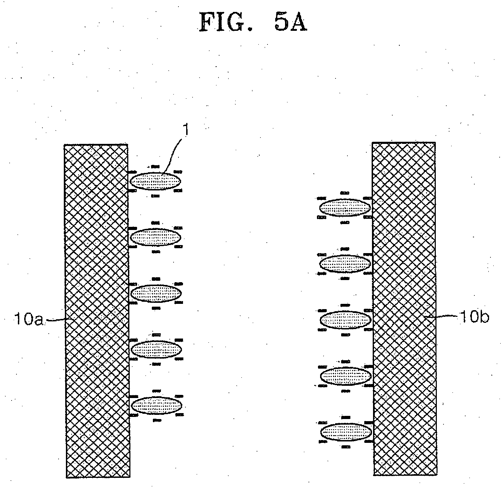

FIG. 5A shows first and second activated filters 10a and 10b used for water purification. A large number of microorganisms 1 are illustrated as being adsorbed to the first and second activated filters 10a and 10b, thus representing a filter unit in need of regeneration. The surface of the microorganisms 1 may have negative charges at neutral pH (potential of hydrogen).

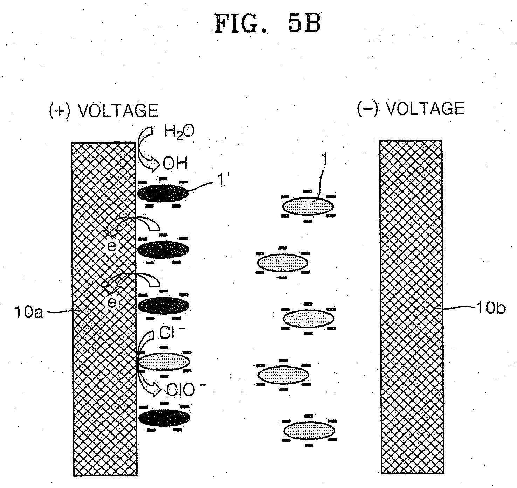

Referring to FIG. 5B, a positive (+) voltage may be applied to the first activated carbon filter 10a, and a negative (-) voltage may be applied to the second activated carbon filter 10b using the voltage applying device 200 (as illustrated in FIG. 1). This may be referred to as a forward voltage being applied between the first and second activated filters 10a and 10b. Tap water may fill or flow in the filter unit 100 (FIG. 1) while the forward voltage is applied thereto. In one embodiment, the tap water may be hard e.g., the tap water may have a comparative abundance of minerals dissolved therein. In the first activated carbon filter 10a to which the positive (+) voltage is applied, the adsorbed microorganisms 1 may be oxidized. The oxidation of the microorganisms 1 indicates that the microorganisms 1 have been sterilized. The oxidized microorganisms 1 are represented by reference numeral 1'. In more detail, the first activated carbon filter 10a to which the positive (+) voltage is applied may directly oxidize the microorganisms 1 by taking electrons from the microorganisms 1 or oxidize the microorganisms 1 using reactive oxygen species (i.e., ozone, hydroxyl radical, etc.), hypochlorous acid (HOCl, OCl⁻), etc. generated by electrolysis of water. In addition, if hard water is used, ions, for example, Cl⁻ ions are changed to a sterilizing component such as OCl⁻ or HOCI in the vicinity of the first activated carbon filter 10a to which the positive (+) voltage is applied. The microorganisms 1 may be sterilized by the sterilizing component of the modified hard water ions. In addition, hydrogen peroxide (H₂O₂) ozone (O₃) and hydroxyl radical (OH radical, OH), and the like may be generated on the surface of the first activated carbon filter 10a by the positive (+) voltage. Theses oxygen species have stronger oxidizing power than hydrochlorous acid to efficiently sterilize the microorganisms 1. Meanwhile, in the second activated carbon filter 10b to which the negative (-) voltage is applied, the adsorbed microorganisms 1 may be desorbed from the second activated carbon filter 10b by electric repulsion. In FIG. 5B, one microorganism has been illustrated as surviving the sterilization process as the application of the voltage may not be 100% effective; however, repeated application of the voltage may result in complete sterilization as discussed in more detail below

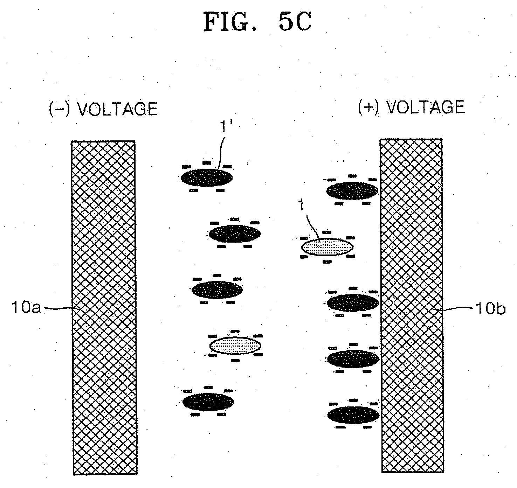

Referring to FIG. 5C, the applied voltages may be alternated and a negative (-) voltage may be applied to the first activated carbon filter 10a, and a positive (+) voltage may be applied to the second activated carbon filter 10b. This may be referred to as a reverse voltage application between the first and second activated filters 10a and 10b. While the reverse voltage is applied thereto, the microorganisms 1 are adsorbed to the second activated carbon filter 10b to which the positive (+) voltage is applied and oxidized (sterilized). The microorganisms 1 and 1' may be desorbed from the first activated carbon filter 10a to which the negative (-) voltage is applied.

In FIGS. 5B and 5C, the positive (+) voltage may be a voltage capable of inducing electrolysis of water between the first and second activated filters 10a and 10b. In addition, the positive (+) voltage may be a voltage generating a positive electric potential of at least 1.4 V on the surfaces of first and second activated filters 10a and 10b. For example, in one embodiment the positive (+) voltage may be greater than about 2 V and equal to or less than about 50 V. The sterilization of the microorganisms 1 may be efficiently performed using the voltage within the range described above. Water may be electrolyzed when the surface electric potential is about 1.2 V or greater. If a low positive (+) voltage by which water cannot be electrolyzed is used, a desired electro-chemical reaction (oxidation) may not occur. In more detail, hydrochlorous acid (HOCl, OCl⁻) may be generated when the surface electric potential of the first and second activated filters 10a and 10b is about 1.4 V or greater, hydrogen peroxide (H₂O₂) may be generated when the surface electric potential of the first and second activated filters 10a and 10b is about 1.8 V or greater, and ozone (O₃) may be generated when the surface electric potential of the first and second activated filters 10a and 10b is about 2.1 V or greater. The hydroxyl radical (OH radical) may be generated when the surface electric potential of the first and second activated filters 10a and 10b is about 2.7 V or greater. Thus, the oxidizing/sterilizing components may be efficiently generated and desired chemical reaction (sterilization) may be performed by using a positive (+) voltage that generates an electric potential of 1.2 V or greater on the surface of the first and second activated filters 10a and 10b. Due to the resistance of the first and second activated filters 10a and 10b, a positive (+) voltage of 2 V or greater is applied to the activated filters 10a and 10b in order to generate an electric potential of 1.4 V or greater on the surface of the first and second activated filters 10a and 10b. However, the initial intensity of the positive (+) voltage to induce the sterilization/oxidization may vary according to the configuration of the filter system.

Meanwhile, in FIGS. 5B and 5C, the negative (-) voltage induces the desorption of microorganisms 1 and 1', respectively.

The operations shown in FIGS. 5B and 5C may be alternately repeated. That is, "sterilization→desorption→sterilization→desorption" are repeated by alternately applying the positive (+) voltage and the negative (-) voltage to the first and second activated filters 10a and 10b using the first and second activated filters 10a and 10b as electrodes, e.g., by alternately applying the forward voltage and the reverse voltage to the first and second activated filters 10a and 10b, to efficiently regenerate the first and second activated filters 10a and 10b. In this regard, when tap water flows into the filter unit 100 (FIG. 1), the microorganisms 1' that are oxidized and desorbed and the microorganisms 1 that are not oxidized and desorbed are discharged out of the filter unit 100 with the tap water. In this regard, embodiments include configurations wherein tap water flowed into the filter unit 100 passes through the filter unit 100 and is discharged out of the filter unit 100. However, alternative embodiments include configurations wherein tap water may be circulated in the filter unit 100 during the regeneration process.

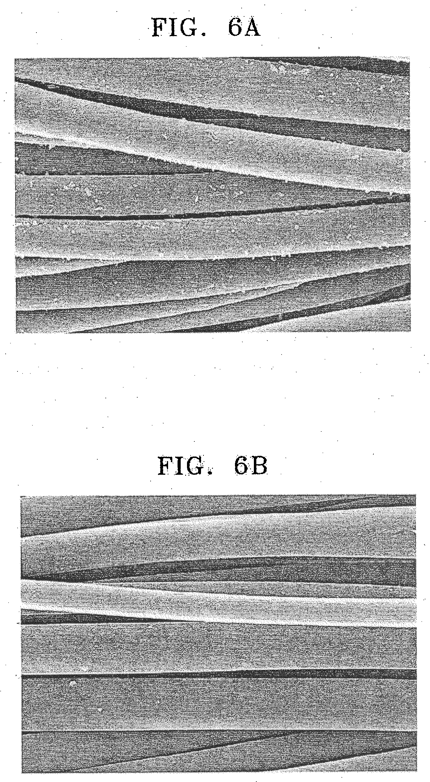

FIGS. 6A and 6B are scanning electron microscopic ("SEM") images of microorganisms absorbed on activated carbon filters to which a positive (+) voltage and a negative (-) voltage are respectively applied for 5 minutes, respectively.

Referring to FIG. 6A, a large number of microorganisms (illustrated as white flaky material on the activated carbon fibers) are adsorbed on the activated carbon filter to which a positive (+) voltage is applied. Most of the microorganisms adsorbed to the activated carbon filter may be sterilized by oxidation.

Referring to FIG. 6B, most of the adsorbed microorganisms are desorbed from the activated carbon filter to which a negative (-) voltage is applied.

According to the current embodiment of a method of regenerating the drinking water filter system, the first and second activated filters 10a and 10b are used as electrodes, and thus additional metal electrodes are not necessary. In addition, tap water is used instead of high concentration electrolyte. Thus, the structure of the regenerative filter system may be simplified, and the filter system may be simply and quickly regenerated.

Regeneration efficiencies of an embodiment of a drinking water filter system for various pollution conditions are shown in Table 1 below.

**Table 1**

| | Pollution degree of influent (CFU/ml) | Pollution degree of effluent before regeneration (CFU/ml) | Pollution degree of effluent after regeneration (CFU/ml) | Regeneration efficiency (%) |
|---|---|---|---|---|
| 1 | 2×10⁵ | 30 | 5 | 84 |
| 2 | 2×10⁶ | 100 | 10 | 90 |
| 3 | 5×10⁶ | 245 | 50 | 80 |
| 4 | 1×10⁷ | 1367 | 87 | 94 |
| 5 | 2×10⁷ | 5030 | 303 | 94 |

Table 1 shows the results obtained using the embodiment of a drinking water filter system shown in FIG. 1. In this regard, an activated carbon fiber having a size of 10×10 cm² was used for the first and second activated filters 10a and 10b, a graphite foil was used as the current collecting layer 20 and a separation layer 5 had a mesh structure.

First, 100 ml of a solution of *Pseudomonas aeruginosa* PA01 with a high concentration ranging from about 2×10⁵ to about 2×10⁷ CFU/ml was circulated in a filter unit at a flow rate of 50 ml/min for 30 minutes to pollute the filter unit. Then, 200 ml of simulated tap water (0 CFU/ml, 500 µS/cm, Cl⁻ 60 ppm) was passed through the polluted filter unit at a flow rate of 50 ml/min. Then, the pollution degree of the effluent was measured and shown as the 'pollution degree of effluent before regeneration' of Table 1. Then, 200 ml of simulated tap water (0 CFU/ml, 500 µS/cm, Cl⁻ 60 ppm) was circulated in the polluted filter unit at a flow rate of 50 ml/min during regeneration of the filter unit according to the embodiment of a method described above. In this regard, a positive (+) voltage of about +3V and a negative (-) voltage of about -3 V were alternately applied to two activated carbon filters for 5 minutes each, for 20 minutes in total. Then, 200 ml of simulated tap water (0 CFU/ml, 500 µS/cm, Cl⁻ 60 ppm) was passed through the regenerated filter unit at a flow rate of 50 ml/min. In this regard, the pollution degree of the effluent was measured and shown as 'pollution degree of effluent after regeneration' in Table 1. Meanwhile, 'regeneration efficiency' of Table 1 was obtained by multiplying (1 - pollution degree after regeneration/pollution degree before regeneration) by 100.

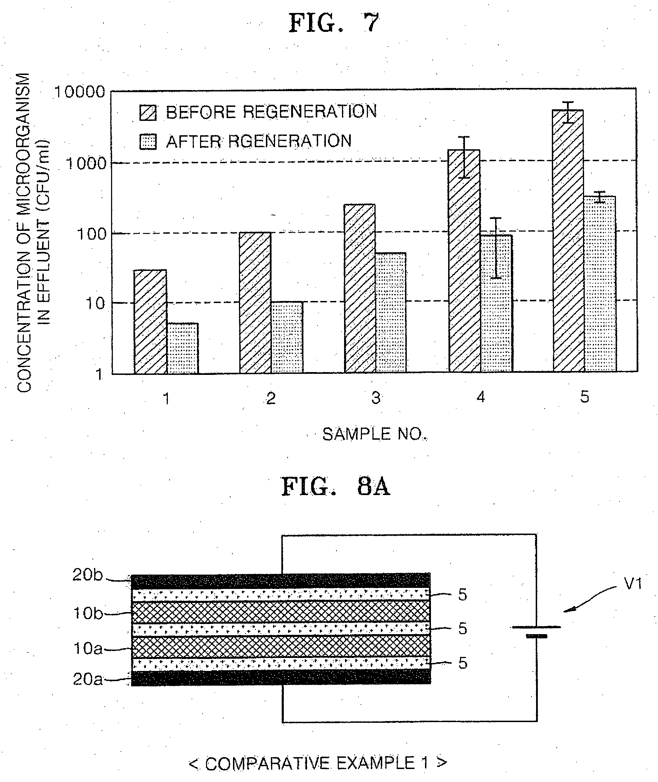

Referring to Table 1, the concentration of the microorganisms contained in the effluent after regeneration was reduced by about 80% to 94% compared with that of the microorganisms contained in the effluent before regeneration. If the pollution degree was 2×10⁷ CFU/ml, the pollution degree before regeneration was about 5030 CFU/ml, while the pollution degree after regeneration was about 303 CFU/ml. In addition, in such a degree of pollution, the regeneration efficiency is about 94%. The results of Table 1 are shown in a graph of FIG. 7 (please note that FIG. 7 is illustrated with an logarithmic scale).

Pollution degree (CFU/ml) before and after regeneration and regeneration efficiency (%) of the drinking water filter system according to an example according to an embodiment as described above and comparative examples are shown in Table 2 below. Solution of *Pseudomonas aeruginosa* PA01 with a concentration of about 10⁷ CFU/ml was used as polluted water. All other conditions for pollution and treating water (i.e., simulated tap water) were the same as those described with reference to Table 1. The conditions for regeneration of the drinking water filter system according to Embodiment 1 were also the same as those described with reference to Table 1. Conditions for regeneration of the drinking water filter system according to Comparative Examples 1 to 4 (intensity of voltage, voltage applying time, and the like) are listed in Table 2 below.

**Table 2**

| | Comparative Example 1 | Comparative Example 2 | Comparative Example 3 | Comparative Example 4 | Embodiment 1 |
|---|---|---|---|---|---|
| Characteristic s | Activated carbon: not electrode | Activated carbon: (+) electrode | Activated carbon: (-) electrode | Activated carbon: both electrodes | Activated carbon: both electrodes |
| | Alternate voltage: No | Alternate voltage: No | Alternate voltage: No | Alternate voltage: No | Alternate voltage: Yes |
| | +3V/-3V 20 min | +3V 20 min | -3V 20 min | +3V/-3V 20 min | +3V/-3V alternated every 5 min (20 min in total) |
| Pollution degree before regeneration | 3500 | 3850 | 3950 | 3950 | 1367 |
| Pollution degree after regeneration | 3500 | 3500 | 1600 | 1200 | 87 |
| Regeneration efficiency | 0 | 9 | 59 | 70 | 94 |

Drinking water filter systems according to Comparative Examples 1 to 4 and Embodiment 1 shown in Table 2 are illustrated in FIGS. 8A to 8E.

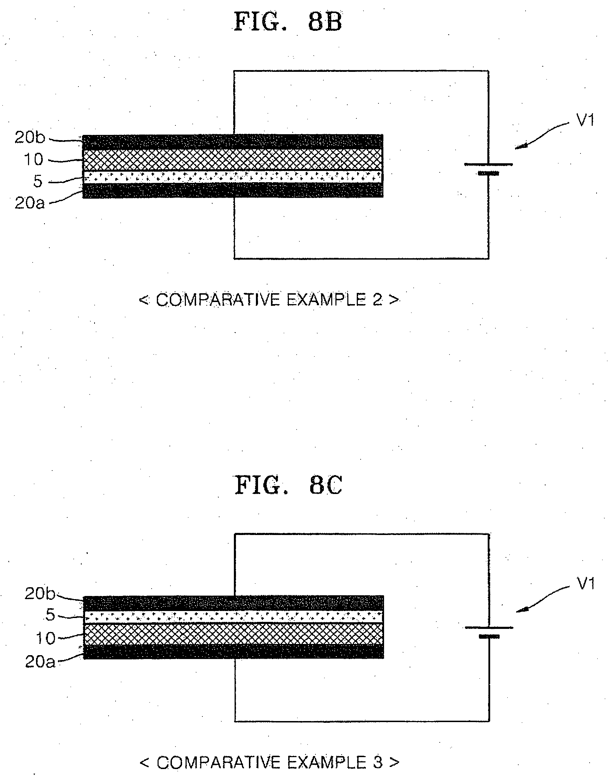

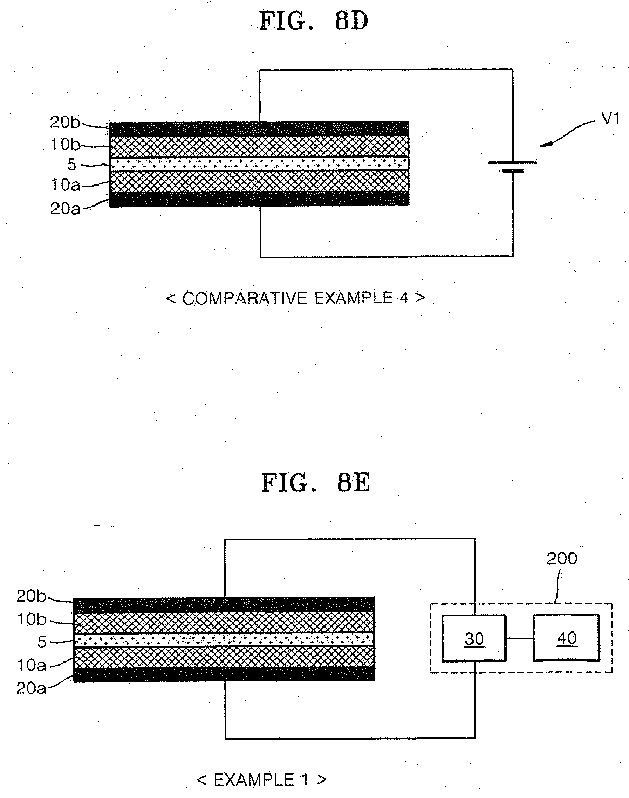

Referring to FIG. 8A, the drinking water filter system of Comparative Example 1, separation layers 5 are disposed between the first activated carbon filter 10a and the first current collecting layer 20a, between the first and second activated carbon filters 10a and 10b, and between the second activated carbon filter 10b and the second current collecting layer 20b. The first and second current collecting layers 20a and 20b are connected to a DC power supply V1. In this regard, since the first and second activated carbon filters 10a and 10b are not electrically connected to the DC power supply V1, they are not used as electrodes, e.g., their function as electrodes is prevented by the insertion of the separation layer 5 between them and the current collection layers 20a and 20b. Instead, the first and second current collecting layers 20a and 20b are used as electrodes. The DC power supply V1 is also used in FIGS. 8B and 8D.

Referring to FIG. 8B, the drinking water filter system of Comparative Example 2, a single activated carbon filter 10 is used as the positive (+) electrode. The separation layer 5 and the first current collecting layer 20a are sequentially disposed on the lower surface of the activated carbon filter 10, and the second current collecting layer 20b is disposed on the upper surface of the activated carbon filter 10. The first and second current collecting layers 20a and 20b are respectively connected to the negative (-) and a positive (+) terminals of the DC power supply V1. During the regeneration, the activated carbon filter 10 is used as the positive (+) electrode, and the first current collecting layer 20a is used as the negative (-) electrode. In this regard, a positive (+) voltage and a negative (-) voltage cannot be alternately applied to the activated carbon filter 10. That is, a reverse voltage is not applied to the activated carbon filter 10. Specifically, the separation layer 5 prevents the carbon filter 10 from being used as a negative (-) electrode.

Referring to FIG. 8C, the drinking water filter system of Comparative Example 3, a single activated carbon filter 10 is used as a negative (-) electrode. This example is similar to that illustrated in FIG. 8B if the terminals to the DC power supply V1 were reversed. That is, the first current collecting layer 20a is disposed on the lower surface of the activated carbon filter 10, and the separation layer 5 and the second current collecting layer 20b are sequentially disposed on the upper surface of the activated carbon filter 10. The first and second current collecting layers 20a and 20b are respectively connected to the negative (-) and positive (+) terminals of the DC power supply V1. During the regeneration, the activated carbon filter 10 is used as the negative (-) electrode, and the second current collecting layer 20b is used as the positive (+) electrode. In this regard, a positive (+) voltage and a negative (-) voltage may not be alternately applied to the activated carbon filter 10. That is, a reverse voltage is not applied to the activated carbon filter 10.

Referring to FIG. 8D, the drinking water filter system of Comparative Example 4, the first and second activated filters 10a and 10b are separately disposed on both sides of the separation layer 5, the first current collecting layer 20a is disposed on the lower surface of the first activated carbon filter 10a, and the second current collecting layer 20b is disposed on the upper surface of the second activated carbon filter 10b. The first and second current collecting layers 20a and 20b are respectively connected to the negative (-) and positive (+) terminals of the DC power supply V1. Although both of the first and second activated carbon filters 10a and 10b are used as electrodes, a positive (+) voltage and a negative (-) voltage may not be alternately applied to the first and second activated carbon filters 10a and 10b during the regeneration because the DC power supply V1 applies only a direct current to the first activated carbon filter 10a and the second activated carbon filter 10b. That is, a reverse voltage is not applied to the first and second activated carbon filters 10a and 10b.

Referring to FIG. 8E, the drinking water filter system according to Embodiment 1 has the same structure shown in the embodiment of FIG. 1. In this regard, both of the first and second activated carbon filters 10a and 10b are used as electrodes, a positive (+) voltage and a negative (-) voltage are alternately applied to the first and second activated carbon filters 10a and 10b during the regeneration process. That is, a forward voltage and a reverse voltage are alternately applied to the first and second activated carbon filters 10a and 10b.

Activated carbon fiber is used for the activated carbon filters 10a, 10b, and 10 shown in FIGS. 8A to 8E.

Referring to Table 2, the drinking water filter systems according to Comparative Examples 1 and 2 have very low regeneration efficiencies of 0% and 9%, respectively. Even though the drinking water filter systems according to Comparative Examples 3 and 4 have regeneration efficiencies of 59% and 70%, respectively, the regeneration efficiency is far less than the regeneration efficiency (94%) of the drinking water filter system according to Embodiment 1. Thus, it is identified that the embodiment of a drinking water filter system illustrated in FIG. 1 (and FIG. 8E) may have excellent regeneration efficiency by using both of the first and second activated carbon filters 10a and 10b as electrodes, and alternately applying a positive voltage and a negative voltage to the first and second activated carbon filters 10a and 10b, when compared to the drinking water filter systems according to Comparative Examples 1 to 4.

The pollution degree (CFU/ml) before and after the regeneration of the drinking water filter system according to another embodiment and regeneration efficiency (%) thereof are shown in Table 3 below. Even though an activated carbon fiber was used for the activated carbon filter in Embodiment 1 as shown in Table 2, activated carbon paste was used for the activated carbon filters in Embodiments 2 to 4 as shown in Table 3. PC manufactured by Osaka Gas Co., Ltd. was used as a powdered active material used to prepare the paste in Embodiments 2 and 3, and MSP manufactured by Kansai Coke and Chemicals Co., Ltd. was used as a powdered active material used to prepare the paste in Embodiment 4. The configurations of the drinking water filter systems according to Embodiments 2 to 4 shown in Table 3 below was substantially the same as that in Embodiment 1, except that the material used to prepare the activated carbon filter varied.

**Table 3**

| | Embodiment 2 | Embodiment 3 | Embodiment 4 |
|---|---|---|---|
| Characteristics | Activated carbon: Paste (PC) | Activated carbon: Paste (PC) | Activated carbon: Paste (MSP) |
| | Alternate voltage: 5V/-5V | Alternate voltage: 7V/-7V | Alternate voltage: 5V/-5V |
| Pollution degree before regeneration (CFU/ml) | 155000 | 310000 | 295000 |
| Pollution degree after regeneration (CFU/ml) | 15150 | 31650 | 40000 |
| Regeneration efficiency (%) | 90 | 90 | 86 |

A solution of *Pseudomonas aeruginosa* PA01 with a concentration of about 10⁷ CFU/ml, which is substantially the same solution for Table 2, was used as polluted water to obtain the results of Table 3. All other conditions for pollution and treating water (i.e., simulated tap water) were substantially the same as those described with reference to Table 1, except that 5V/-5V voltages were alternately applied for the regeneration in Embodiments 2 and 4, and 7V/-7V voltages were alternately applied for the regeneration in Embodiment 3.

Referring to Table 3, the regeneration efficiencies of Embodiments 2, 3 and 4 were about 90%, 90% and 86%, respectively.

As described above, according to embodiments, a regenerative drinking water filters system having a simple configuration may be manufactured. The drinking water filter system may be electrochemically sterilized and regenerated using an in-situ method without adding additives such as an electrolyte. Therefore, the drinking water filter system may be hygienically managed, thereby maintaining stability of the hygiene of drinking water. In addition, the lifetime of the drinking water filter system may increase.

The drinking water filter system may be applied a variety of water purifying devices. The drinking water filter system may be applied to a water purifying device for home use, a water dispenser of a refrigerator, a kettle-shaped water purifying device, a direct faucet connected water purifying device, etc. The embodiments disclosed herein may also be applied to a water purifying device for industrial use in addition to the water purifying device for home use. The configuration of the water purifying device employing the drinking water filter system is well-known, and thus description thereof will be omitted herein.

It should be understood that the embodiments described therein should be considered in a descriptive sense only and not for purposes of limitation. Descriptions of features or aspects within each embodiment should typically be considered as available for other similar features or aspects in other embodiments. For example, it would have been obvious to one with common knowledge that the components and configuration of the drinking water filter systems of FIGS. 1 to 4 may be modified in various ways.

## Claims

1. A drinking water filter system comprising:
a filter unit (100) comprising:
a first electrode (10a); and
a second electrode (10b) disposed separate from and substantially opposite to the first electrode,
wherein at least one of the first electrode (10a) and the second electrode (10b) are filter layers of activated carbon filters for filtering drinking water; and
a voltage applying device (200) which alternately and repeatedly applies a forward voltage and a reverse voltage between the first electrode and the second electrode to sterilize and regenerate the at least one filter layer.
**characterised in that** the voltage applying device (200) is configured to apply a voltage capable of electrolyzing water between the first electrode and the second electrode and to generate a positive electric potential of at least 1.4 V on the surface of at least one of the first electrode and the second electrode in a sterilization process of the filter layer; and
the voltage applying device (200) is configured to alternately apply a positive voltage and negative voltage to the first electrode and the second electrode in the regeneration process wherein the positive voltage is greater than 2V and equal to or less than 50V; and
the drinking water filter system is configured to regenerate the filter layers by using the voltage applying device (200) using tap water and without adding electrolyte in the filter unit (100).

2. The drinking water filter system of claim 1, wherein the voltage applying device (200) comprises:
a power supply (30) connected to the first electrode and the second electrode; and
a function generator (40) connected to the power supply.

3. The drinking water filter system of any preceding claim, wherein a water permeable insulating layer (5) is disposed between the first electrode and the second electrode.

4. The drinking water filter system of any preceding claim, further comprising:
a first current collecting layer (20a) disposed on an outer surface of the first electrode; and
a second current collecting layer (20b) disposed on an outer surface of the second electrode,
wherein the first electrode and the second electrode are connected to the voltage applying device via the first current collecting layer and the second current collecting layer, respectively.

5. The drinking water filter system of any preceding claim, further comprising:
at least one additional filter unit (100), the at least one additional filter unit comprising:
a first electrode (10a); and
a second electrode (10b) disposed separate from and substantially opposite to the first electrode,
wherein the first electrode (10a) and the second electrode (10b) are filter layers of activated carbon filters;
wherein the at least one additional filter unit (100) is stacked on the filter unit and the at least one additional filter unit is connected in parallel to the voltage applying device with the filter unit.

6. The drinking water filter system of any of claims 1 to 4, wherein the filter unit further comprises:
at least one additional filter layer (10) disposed between the first electrode and the second electrode; and
a water permeable insulating layer (5) disposed between every two adjacent layers of the first electrode, the at least one additional filter layer and the second electrode.

7. The drinking water filter system of any preceding claim, wherein the filter unit has one of a planar shape and a roll shape.

8. A water purifying device comprising a drinking water filter system according to any preceding claim.

9. Method of regeneration of a drinking water filter system comprising a filter unit, the drinking water filter system comprising:
a filter unit (100) comprising:
a first electrode (10a); and
a second electrode (10b) disposed separate from and substantially opposite to the first electrode,
wherein at least one of the first electrode (10a) and the second electrode (10b) are filter layers of activated carbon filters for filtering drinking water; and
a voltage applying device (200) which alternately and repeatedly applies a forward voltage and a reverse voltage between the first electrode and the second electrode to sterilize and regenerate the at least one filter layer.
the method comprising regenerating the drinking water filter system by:
the voltage applying device (200) alternately applying a postive voltage and a negative voltage between the first electrode and the second electrode to sterilize and regenerate the filter layer, using tap water and without adding electrolyte in the filter unit;
wherein the voltage applying device (200) is configured to apply a voltage capable of electrolyzing water between the first electrode and the second electrode and to generate a positive electric potential of at least 1.4 V on the surface of at least one of the first electrode and the second electrode in a sterilization process of the filter layer; and
wherein the positive voltage is greater than 2V and equal to or less than 50V.

10. The method of claim 9, wherein at least one of the first electrode and the second electrode (10a,10b) is an activated carbon filter layer and optionally the other of the first electrode and the second electrode (10a,10b) is a metal layer.

11. The method of claim 9 or 10, wherein the forward voltage and the reverse voltage are applied between the first electrode and the second electrode using a voltage applying device comprising:
a power supply (30) connected to the first electrode and the second electrode; and
a function generator (40) connected to the power supply.

12. The method of claim any of claims 9 to 11, wherein tap water at least one of fills and flows in the filter unit during the sterilization.

## Patentansprüche

1. Ein Trinkwasserfiltersystem, umfassend: eine Filtereinheit (100), umfassend:
eine erste Elektrode (10a); und
eine zweite Elektrode (10b), die getrennt und im Wesentlichen gegenüber der ersten Elektrode angeordnet ist,
wobei mindestens eine der ersten Elektrode (10a) und der zweiten Elektrode (10b) Filterschichten aus Aktivkohlefiltern zur Filtration des Trinkwassers sind; und
eine Spannungsanlegevorrichtung (200), die alternierend und wiederholt eine Durchlassspannung und eine Rückwärtssperrspannung zwischen der ersten Elektrode und der zweiten Elektrode anlegt, um die mindestens eine Filterschicht zu sterilisieren und zu regenerieren,
**dadurch gekennzeichnet, dass** die Spannungsanlegevorrichtung (200) so konfiguriert ist, dass sie eine Spannung anlegt, die in der Lage ist, das Wasser zwischen der ersten Elektrode und der zweiten Elektrode zu elektrolysieren und ein positives elektrisches Potential von mindestens 1,4 V auf der Oberfläche von mindestens entweder der ersten oder der zweiten Elektrode im Rahmen einer Sterilisierung der Filterschicht zu erzeugen; und
die Spannungsanlegevorrichtung (200) so konfiguriert ist, dass sie im Rahmen der Regeneration alternierend eine positive Spannung und eine negative Spannung an der ersten Elektrode und der zweiten Elektrode anlegt, wobei die positive Spannung über 2 V und gleich oder kleiner 50 V beträgt; und
das Trinkwasserfiltersystem so konfiguriert ist, dass es die Filterschichten unter Verwendung der Spannungsanlegevorrichtung (200) mittels Leitungswasser und ohne die Zugabe von Elektrolyten in die Filtereinheit (100) regeneriert.

2. Trinkwasserfiltersystem nach Anspruch 1, wobei die Spannungsanlegevorrichtung (200) Folgendes umfasst:
eine an die erste Elektrode und die zweite Elektrode angeschlossene Spannungsversorgung (30); und einen an die Spannungsversorgung angeschlossenen Funktionsgenerator (40).

3. Trinkwasserfiltersystem nach einem der vorstehenden Ansprüche, wobei eine wasserdurchlässige Isolierschicht (5) zwischen der ersten Elektrode und der zweiten Elektrode angeordnet ist.

4. Trinkwasserfiltersystem nach einem der vorstehenden Ansprüche, ferner umfassend:
eine erste Stromabnahmeschicht (20a), die auf einer Außenfläche der ersten Elektrode angeordnet ist; und
eine zweite Stromabnahmeschicht (20b), die auf einer Außenfläche der zweiten Elektrode angeordnet ist,
wobei die erste Elektrode und die zweite Elektrode über die erste Stromabnahmeschicht bzw. die zweite Stromabnahmeschicht an die Spannungsanlegevorrichtung angeschlossen sind.

5. Trinkwasserfiltersystem nach einem der vorstehenden Ansprüche, ferner umfassend:
mindestens eine zusätzliche Filtereinheit (100), wobei die mindestens eine zusätzliche Filtereinheit Folgendes umfasst:
eine erste Elektrode (10a); und
eine zweite Elektrode (10b), die getrennt und im Wesentlichen gegenüber der ersten Elektrode angeordnet ist,
wobei die erste Elektrode (10a) und die zweite Elektrode (10b) Filterschichten aus Aktivkohlefiltern sind;
wobei die mindestens eine zusätzliche Filtereinheit (100) über der Filtereinheit angeordnet ist und die mindestens eine zusätzliche Filtereinheit parallel zur Filtereinheit an die Spannungsanlegevorrichtung angeschlossen ist.

6. Trinkwasserfiltersystem nach einem der Ansprüche 1 bis 4, wobei die Filtereinheit ferner Folgendes umfasst:
mindestens eine zusätzliche Filterschicht (10), die zwischen der ersten Elektrode und der zweiten Elektrode angeordnet ist; und
eine wasserdurchlässige Isolierschicht (5), die zwischen jeweils zwei benachbarten Schichten der ersten Elektrode, der mindestens einen zusätzlichen Filterschicht und der zweiten Elektrode angeordnet ist.

7. Trinkwasserfiltersystem nach einem der vorstehenden Ansprüche, wobei die Filtereinheit entweder eine ebene Form oder eine Rollenform aufweist.

8. Wasseraufbereitungsgerät, umfassend ein Trinkwasserfiltersystem nach einem der vorstehenden Ansprüche.

9. Verfahren zur Regeneration eines Trinkwasserfiltersystems, umfassend eine Filtereinheit, wobei das Trinkwasserfiltersystem Folgendes umfasst:
eine Filtereinheit (100), umfassend:
eine erste Elektrode (10a); und
eine zweite Elektrode (10b), die getrennt und im Wesentlichen gegenüber der ersten Elektrode angeordnet ist,
wobei mindestens eine der ersten Elektrode (10a) und der zweiten Elektrode (10b) Filterschichten aus Aktivkohlefiltern zur Filtration des Trinkwassers sind; und
eine Spannungsanlegevorrichtung (200), die alternierend und wiederholt eine Durchlassspannung und eine Rückwärtssperrspannung zwischen der ersten Elektrode und der zweiten Elektrode anlegt, um die mindestens eine Filterschicht zu sterilisieren und zu regenerieren,
Das Verfahren umfasst die Regeneration des Trinkwasserfiltersystems durch:
die Spannungsanlegevorrichtung (200), die alternierend eine positive Spannung und eine negative Spannung zwischen der ersten und der zweiten Elektrode anlegt, um die Filterschicht unter Verwendung von Leitungswasser und ohne Zugabe von Elektrolyten in die Filtereinheit zu regenerieren;
wobei die Spannungsanlegevorrichtung (200) so konfiguriert ist, dass sie eine Spannung anlegt, die in der Lage ist, das Wasser zwischen der ersten Elektrode und der zweiten Elektrode zu elektrolysieren und ein positives elektrisches Potential von mindestens 1,4 V auf der Oberfläche von mindestens entweder der ersten oder der zweiten Elektrode im Rahmen einer Sterilisierung der Filterschicht zu erzeugen; und
wobei die positive Spannung größer als 2 V und gleich oder kleiner als 50 V ist.

10. Verfahren nach Anspruch 9, wobei mindestens entweder die erste Elektrode oder die zweite Elektrode (10a, 10b) eine Aktivkohlefilterschicht und die andere der ersten Elektrode oder der zweiten Elektrode (10a, 10b) optional eine Metallschicht ist.

11. Verfahren nach Anspruch 9 oder 10, wobei die Durchlassspannung und die Rückwärtssperrspannung zwischen der ersten Elektrode und der zweiten Elektrode angelegt werden, unter Zuhilfenahme einer Spannungsanlegevorrichtung, umfassend:
eine an die erste Elektrode und die zweite Elektrode angeschlossene Spannungsversorgung (30); und
einen an die Spannungsversorgung angeschlossenen Funktionsgenerator (40).

12. Verfahren nach einem der Ansprüche 9 bis 11, wobei das Leitungswasser während der Sterilisierung mindestens entweder in die Filtereinheit gefüllt wird oder die Filtereinheit durchströmt.

## Revendications

1. Un système de filtre d'eau potable, comprenant : une unité de filtrage (100) comprenant :
une première électrode (10a) ; et
une deuxième électrode (10b) disposée de façon à être séparée de la première électrode et faisant substantiellement face à celle-ci ;
au moins une des électrodes que sont la première électrode (10a) et la deuxième électrode (10b) comporte des couches de filtre de filtres à charbon actif pour le filtrage de l'eau potable ; et
un dispositif d'application d'une tension électrique (200) appliquant en alternance et de façon répétée une tension directe et une tension inverse entre la première électrode et la deuxième électrode pour stériliser et régénérer la couche de filtre au nombre d'au moins une.
**caractérisé en ce que** le dispositif d'application d'une tension électrique (200) est configuré pour appliquer une tension capable d'électrolyser l'eau entre la première électrode et la deuxième électrode, et générer un potentiel électrique positif d'au moins 1,4 V sur la surface d'au moins une des électrodes que sont la première électrode et la deuxième électrode dans un procédé de stérilisation de la couche de filtre ; et
le dispositif d'application d'une tension électrique (200) étant configuré pour appliquer une tension positive et une tension négative à la première électrode et à la deuxième électrode dans le procédé de régénération, la tension positive étant supérieure à 2V et égale ou inférieure à 50V ; et
le système de filtre d'eau potable étant configuré pour régénérer les couches de filtre à l'aide du dispositif d'application d'une tension électrique (200) utilisant de l'eau du robinet et sans ajouter d'électrolyte dans l'unité de filtrage (100).

2. Le système de filtre d'eau potable selon la revendication 1, le dispositif d'application de la tension (200) comprenant :
une alimentation électrique (30) connectée à la première électrode et à la deuxième électrode ; et
un générateur de fonction (40) connecté à l'alimentation électrique.

3. Le système de filtre d'eau potable selon une quelconque des revendications précédentes, une couche isolante perméable à l'eau (5) étant disposée entre la première électrode et la deuxième électrode.

4. Le système de filtre d'eau potable selon une quelconque des revendications précédentes, comprenant en outre :
une première couche collectrice de courant (20a) disposée sur une surface extérieure de la première électrode ; et
une deuxième couche collectrice de courant (20b) disposée sur une surface extérieure de la deuxième électrode,
la première électrode et à la deuxième électrode étant connectées au dispositif d'application de tension à travers la première couche collectrice de courant et la deuxième couche collectrice de courant respectivement.

5. Le système de filtre d'eau potable selon une quelconque des revendications précédentes, comprenant en outre :
au moins une unité de filtrage (100) additionnelle, l'unité de filtrage additionnelle au nombre d'au moins une comprenant :
une première électrode (10a) ; et
une deuxième électrode (10b) disposée de façon à être séparée de la première électrode et
faisant substantiellement face à celle-ci ;
la première électrode (10a) et à la deuxième électrode (10b) étant des couches de filtre de filtre à charbon actif ;
l'unité de filtrage (100) additionnelle au nombre d'au moins une étant empilée sur l'unité de filtre et l'unité de filtrage additionnelle au nombre d'au moins une étant connectée en parallèle au dispositif d'application d'une tension électrique avec l'unité de filtrage.

6. Le système de filtre d'eau potable selon une quelconque des revendications 1 à 4, l'unité de filtrage comprenant en outre :
au moins une couche de filtre (10) additionnelle disposée entre la première électrode et la deuxième électrode ; et
une couche isolante perméable à l'eau (5) disposée entre toutes les deux couches adjacentes de la première électrode, de la couche de filtre additionnelle au nombre d'au moins une, et de la deuxième électrode.

7. Le système de filtre d'eau potable selon une quelconque des revendications précédentes, l'unité de filtre ayant une des formes suivantes : forme plane ou forme de rouleau.

8. Un dispositif d'épuration de l'eau, comprenant un système de filtre d'eau potable selon une quelconque des revendications précédentes.

9. Une méthode de régénération d'un système de filtre d'eau potable, comprenant une unité de filtre, le système de filtre d'eau potable comprenant :
une unité de filtrage (100), comprenant :
une première électrode (10a) ; et
une deuxième électrode (10b) disposée de façon à être séparée de la première électrode et faisant substantiellement face à celle-ci ;
au moins une des électrodes que sont la première électrode (10a) et la deuxième électrode (10b) comporte des couches de filtre de filtres à charbon actif pour le filtrage de l'eau potable ; et
un dispositif d'application d'une tension électrique (200) appliquant en alternance et de façon répétée une tension directe et une tension inverse entre la première électrode et la deuxième électrode pour stériliser et régénérer la couche de filtre au nombre d'au moins une,
la méthode comprenant la régénération du système de filtre d'eau potable par :
l'application alternée par le dispositif d'application d'une tension électrique (200) d'une tension positive et d'une tension négative entre la première électrode et la deuxième électrode pour stériliser et régénérer la couche de filtre, en utilisant de l'eau du robinet et sans ajouter d'électrolyte dans l'unité de filtrage ;
le dispositif d'application d'une tension électrique (200) étant configuré pour appliquer une tension capable d'électrolyser de l'eau entre la première électrode et la deuxième électrode, et générer un potentiel électrique positif d'au moins 1,4 V sur la surface d'au moins une des électrodes que sont la première électrode et la deuxième électrode dans un procédé de stérilisation de la couche de filtre ; et
la tension positive étant supérieure à 2V et égale ou inférieure à 50V.

10. La méthode selon la revendication 9, au moins une des électrodes que sont la première électrode et la deuxième électrode (10a, 10b) étant une couche de filtre à charbon actif, et, en option, l'autre des électrodes que sont la première électrode et la deuxième électrode (10a, 10b) étant une couche métallique.

11. La méthode selon la revendication 9 ou 10, la tension directe et la tension inverse étant appliquées entre la première électrode et la deuxième électrode en utilisant un dispositif d'application de la tension comprenant :
une alimentation électrique (30) connectée à la première électrode et à la deuxième électrode ; et
un générateur de fonction (40) connecté à l'alimentation électrique.

12. La méthode selon une quelconque des revendications 9 à 11, au cours de la stérilisation l'eau potable remplissant l'unité de filtre et s'écoulant dans l'unité de filtre, et effectuant au moins un des deux.
